# EUROPEAN PATENT APPLICATION

(11) **EP 1 316 415 A1**
(43) Date of publication of application: **04.06.2003**
(21) Application number: 02380226.7
(22) Date of filing: 31.10.2002
(51) Int. Cl.: B32B 17/10, B44C 5/00, B44C 5/04, B44F 1/06

(54) **Multilayered Glass Plate With Intermediate Decorative Sheet.**

(30) Priority: 28.11.2001 ES 200102884
(71) Applicant: CRISTALES CURVADOS S.A., E-08400 Granollers, Barcelona (ES)
(72) Inventor: Figuerola Gili, Fernando, 08400 Granollers (Barcelona) (ES)
(74) Representative: Esteban Perez-Serrano, Maria Isabel

(57) **Abstract**

Multilayered glass plate comprising two glass plates (1,3) and a decorative sheet (2). This sheets are joined to each other by adhesive layers (4).

## Description

### OBJECT OF THE INVENTION

The present invention relates to an multilayered glass plate from among glass plates of considerable thickness used in compartmentalisation of inner spaces in offices, partition and the like.

This glass plate consists of three sheets, two outer glass sheets and an intermediate sheet of a different material.

The central sheet provides a pleasant appearance and is protected by the adjacent glass plates.

### BACKGROUND OF THE INVENTION

Glass plates are known that incorporate on their inner face a sheet acting as a solar filter.

In these glass plates the sheet is protected from the elements as it is attached to its inner face; in addition, it allows sunlight to pass filtering the rays, admitting only frequencies in the range allowed by the filter sheet.

Among this type of glass plates a specific type incorporate mirrored sheets that allow seeing through in one direction while in the opposite direction they act as a mirror.

Also known are multilayer glass plates meant for use in vehicles.

Glass plates of this type incorporate an intermediate plastic layer that, in the event of an impact, prevents the glass from shattering and being launched towards the driver.

It is important in this type of glasses that the plastic sheet be invisible and allows light to pass, to obtain the greatest possible visibility.

In the present invention a specific layered configuration is established in which the central sheet placed between glass plates determines the overall appearance of the assembly while being protected from the elements.

### DESCRIPTION OF THE INVENTION

The invention object of this memory relates to an multilayered glass plate that can be used to separate and compartmentalise spaces such as working areas and offices.

The invention consists of a glass plate made from two glass sheets having a third sheet placed between them.

The intermediate sheet is made of the material that will define the overall appearance of the glass plate that is either made of natural materials such as a thin wooden sheet with its knots, having small orifices, or tree leaves forming a single sheet, or a performed material such as a metal grid, or any other material used for aesthetic purposes that does not require a subsequent finish, print or coat.

In any event the sheets are attached to each other by a transparent adhesive such as butyral, so that no air pockets are present.

The glass plates have a smooth surface; however, the intermediate sheet can be coarse, such as in the case of wooden sheets.

The adhesive must fully soak the intermediate sheet, so that after the assembly is formed it has a shiny appearance and appears integrated in the glass.

In this way, unless the cross section of the glass is seen it is not possible to appreciate the interface between the outer sheets of butyral and the adhesive.

When the inner sheet is opaque, the resulting glass plate is also opaque and its appearance will be determined by the texture of the intermediate sheet.

The materials that can be interposed between the outer sheets can be natural materials, such as wood sheets, tree leaves arranged orderly or randomly, or pre-formed ones such as a metal mesh used for aesthetic reasons that do not require a later finish, print or coating; thus, the glass plate obtained will have the appearance provided by said intermediate sheet.

For example, wood or cloth sheets allow the presence of small creases as long as the thickness allowed by the use of butyrals is not exceeded, as the adhesive fills the space occupied by the intermediate sheet between the glass sheets.

These creases are an additional resource allowing to add texture to the overall appearance of the glass thus obtained.

With this construction velvet-like textures with a delicate surface reveal themselves, and are even enhanced by the shine provided by the glass, while being protected from the elements.

As time passes they will maintain their appearance and cleaning them is simple, performing this on the glass plate as the inner sheet is not soiled.

### DESCRIPTION OF THE DRAWINGS

The present description is accompanied by a set of drawings for purposes of illustration of a preferred embodiment, and not limiting the invention.

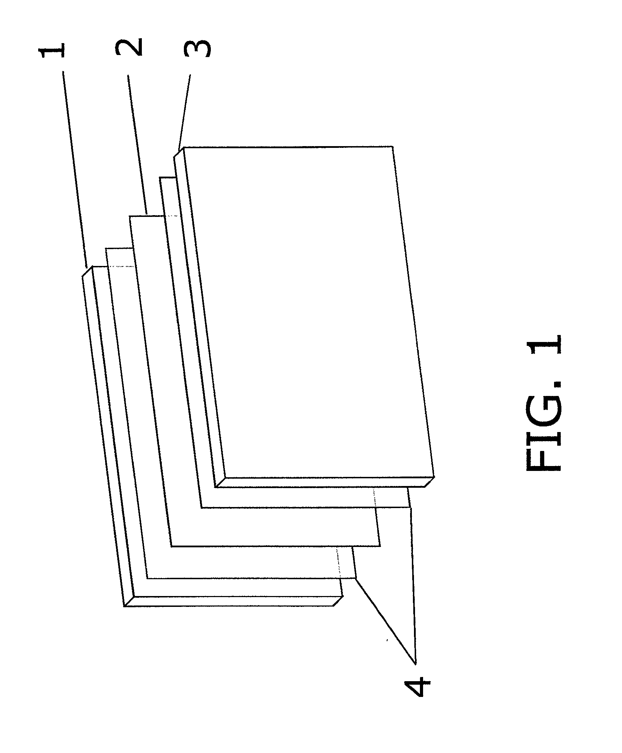

Figure 1 is a schematic exploded view of the two outer glass layers and the sheet set between them.

### PREFERRED EMBODIMENT OF THE INVENTION

In view of the above, the present invention consists of an multilayered glass plate with an intermediate sheet placed for decorative purposes.

The invention is comprised of two glass sheets (1, 3) joined to each other by layers of adhesive (4), such as butyral, between which is set a third sheet (2) considerably thinner that the outer sheets.

The intermediate decorative sheet (2) is made of the material determining the overall appearance of the glass plate, which intermediate sheet is fully soaked in butyral so that no air pockets are visible, which would spoil the effect of a full integration of the sheet in the glass.

The essence of this invention is not affected by variations in the materials, shape, size or arrangement of the component elements, described in a non-limiting manner so that an expert in the field should be able to reproduce the invention.

## Claims

1. Multilayered glass plate with an intermediate decorative sheet, from among glass plates made by superimposing several sheets, **characterised in that** it is comprised of two glass plates (1, 3) joined to each other by an adhesive (4), preferably butyral, and between which is set a third sheet (2) made of a third decorative material (2) without any air pockets, with said intermediate material being of natural origin or pre-formed of those not requiring a later finish, print or coating.
